# EUROPÄISCHE PATENTANMELDUNG

(11) **EP 3 907 429 A1**
(43) Veröffentlichungstag der Anmeldung: **10.11.2021**
(21) Anmeldenummer: 20172744.3
(22) Anmeldetag: 04.05.2020
(51) Int. Cl.: F21V 8/00, F21S 43/241

(54) **BELEUCHTUNGSVORRICHTUNG FÜR EIN KRAFTFAHRZEUG**

(71) Anmelder: ZKW Group GmbH, 3250 Wieselburg (AT)
(72) Erfinder: Maier, Christian, 3281 Oberndorf an der Melk (AT); Firat, Tuncay, 3100 St. Pölten (AT)
(74) Vertreter: Patentanwaltskanzlei Matschnig & Forsthuber OG

(57) **Zusammenfassung**

Beleuchtungsvorrichtung (1) für ein Kraftfahrzeug, umfassend ein Leuchtmittel (2), einen Lichtleiter (3) mit einem ersten Bereich (3a) und einem gekrümmten Bereich (3b), ein erstes optisches Element (4) mit einer Lichteintrittsfläche, welche einen ersten Abschnitt (4a) und einen zweiten Abschnitt (4b) aufweist, wobei das erste optische Element (4) zu dem Lichtleiter (3) dergestalt angeordnet ist, dass Licht, welches aus dem ersten Bereich (3a) des Lichtleiters (3) ausgekoppelt wird, auf den ersten Abschnitt (4a) der Lichteintrittsfläche des ersten optische Elements (4) trifft, und Licht, welches aus dem gekrümmten Bereich (3b) des Lichtleiters (3) ausgekoppelt wird, auf einen Teilbereich des zweiten Abschnitts (4b) der Lichteintrittsfläche des ersten optische Elements (4) trifft, wobei die Beleuchtungsvorrichtung (1) ein zweites optisches Element (5) aufweist, welches zwischen dem gekrümmten Bereich (3b) des Lichtleiters (3) und dem zweiten Abschnitt (4b) der Lichteintrittsfläche des ersten optischen Elements (4) dergestalt angeordnet und dazu eingerichtet ist, Licht, welches aus dem gekrümmten Bereich (3b) des Lichtleiters (3) ausgekoppelt wird, derart umzulenken, dass das Licht, nach dem Durchtritt durch das zweite optische Element (5), auf den gesamten zweiten Abschnitt (4b) der Lichteintrittsfläche des ersten optischen Elements (4) trifft.

## Beschreibung

Die Erfindung betrifft eine Beleuchtungsvorrichtung für ein Kraftfahrzeug oder für ein Kraftfahrzeugscheinwerfer-System, wobei die Beleuchtungsvorrichtung Folgendes umfasst:
- ein Leuchtmittel zur Erzeugung und Abstrahlung von Licht,
- einen Lichtleiter, wobei das Licht des Leuchtmittels in den Lichtleiter eingekoppelt und an einer Auskoppelfläche des Lichtleiters ausgekoppelt wird, wobei der Lichtleiter einen ersten Bereich und einen an den ersten Bereich anschließenden gekrümmten Bereich aufweist, wobei sich die Auskoppelfläche über den ersten und den gekrümmten Bereich erstreckt und dergestalt ausgebildet ist, dass die Lichtstrahlen nach dem Auskoppeln aus dem ersten Bereich parallel zueinander orientiert sind,
- ein erstes optisches Element mit einer Lichteintrittsfläche, welche einen ersten Abschnitt und einen an den ersten Abschnitt angrenzenden zweiten Abschnitt aufweist, wobei das erste optische Element zu dem Lichtleiter dergestalt angeordnet ist, dass Licht, welches aus dem ersten Bereich des Lichtleiters ausgekoppelt wird, auf den ersten Abschnitt der Lichteintrittsfläche des ersten optische Elements trifft, und Licht, welches aus dem gekrümmten Bereich des Lichtleiters ausgekoppelt wird, auf einen Teilbereich des zweiten Abschnitts der Lichteintrittsfläche des ersten optischen Elements trifft.

Die Erfindung betrifft ferner ein Kraftfahrzeugscheinwerfer-System.

Die Erfindung betrifft überdies ein Kraftfahrzeug mit einer Beleuchtungsvorrichtung oder einem Kraftfahrzeugscheinwerfer-System.

Aus der DE 10 2018 130 425 A1 ist eine Beleuchtungsvorrichtung bekannt, welche einen geraden und einen gekrümmten Lichtleiter umfasst, wobei jedem Lichtleiter ein Leuchtmittel zugeordnet ist und Licht in den entsprechenden Lichtleiter einstrahlt. Soll nun ein Bereich mit der Beleuchtungsvorrichtung beleuchtet werden, beleuchtet das erste Leuchtmittel mittels dem geraden Lichtleiter einen ersten Abschnitt des Bereichs und das zweite Leuchtmittel mittels dem gekrümmten Lichtleiter einen zweiten Abschnitt des Bereichs. Nachteiligerweise müssen bei der DE 10 2018 130 425 A1 zwei Leuchtmittel und zwei Lichtleiter verwendet werden um den gesamten Bereich vollständig zu beleuchten. Dies führt zu hohen Kosten und einer komplexeren Bauart der Beleuchtungsvorrichtung.

Die Erfindung setzt sich daher zum Ziel, eine Beleuchtungsvorrichtung zu schaffen, bei welcher die Nachteile des Stands der Technik gelindert werden.

Diese Aufgabe wird durch eine Beleuchtungsvorrichtung mit den Merkmalen von Anspruch 1 gelöst. Bevorzugte Ausführungen sind in den abhängigen Ansprüchen angegeben.

Erfindungsgemäß weist die Beleuchtungsvorrichtung ein zweites optisches Element auf, welches zwischen dem gekrümmten Bereich des Lichtleiters und dem zweiten Abschnitt der Lichteintrittsfläche des ersten optischen Elements dergestalt angeordnet und dazu eingerichtet ist, Licht, welches aus dem gekrümmten Bereich des Lichtleiters ausgekoppelt wird, derart umzulenken, dass das Licht, nach dem Durchtritt durch das zweite optische Element, auf den gesamten zweiten Abschnitt der Lichteintrittsfläche des ersten optischen Elements trifft.

Dadurch ergibt sich der Vorteil, dass mit einem Leuchtmittel, welches vorzugsweise eine einzige Lichtquelle umfasst, die gesamte Lichteintrittsfläche des ersten optischen Elements beleuchtet werden kann, insbesondere der gesamte Randbereich bzw. äußere Bereich der Lichteintrittsfläche. Der erste Bereich des Lichtleiters kann gerade ausgebildet sein oder eine Krümmung aufweisen, wobei in diesem Fall die Krümmung des ersten Bereichs vorzugsweise geringer ist als die Krümmung des gekrümmten Bereichs des Lichtleiters. Das zweite optische Element ist vorzugsweise dazu eingerichtet, das Licht, welches aus dem gekrümmten Bereich des Lichtleiters radial bzw. nicht parallel abgestrahlt wird, einerseits in Richtung des gesamten zweiten Abschnitts der Lichteintrittsfläche des ersten optischen Elements umzulenken, so dass der zweite Abschnitt vollständig beleuchtet wird, und andererseits die Lichtstrahlen beim Austritt aus dem zweiten optischen Element zu parallelisieren. Die Lichtstrahlen sind nach dem Austritt aus dem zweiten optischen Element insbesondere in vertikaler und horizontaler Richtung parallel zueinander orientiert. Die Lichtstrahlen sind vorzugsweise nach dem Austritt aus dem zweiten optischen Element orthogonal zu dem ersten und/oder zweiten Abschnitt der Lichteintrittsfläche orientiert. Die Lichteintrittsfläche kann einen stufenförmigen Aufbau aufweisen, wobei die Lichtstrahlen, nach dem Austritt aus dem zweiten optischen Element, bevorzugt orthogonal zu jenen parallel zueinander angeordneten Stufenabschnitten orientiert sind, welche im Wesentlichen parallel zu dem ersten Bereich des Lichtleiters orientiert sind.

Es kann vorgesehen sein, dass der erste Bereich des Lichtleiters und der erste Abschnitt des optischen Elements im Wesentlichen parallel zu einander orientiert sind. Dadurch kann Licht, welches von dem ersten Bereich des Lichtleiters abgestrahlt wird, besonders effizient in den ersten Abschnitt des ersten optischen Elements eingestrahlt werden.

Es kann vorgesehen sein, dass die Lichtstrahlen nach dem Auskoppeln aus dem Lichtleiter orthogonal zu dem ersten Bereich des Lichtleiters und/oder vorzugsweise orthogonal zur Lichteintrittsfläche des ersten optischen Elements orientiert sind. Der Lichtleiter kann länglich bzw. zylinderförmig ausgestaltet sein, wobei die Lichtstrahlen vorzugsweise orthogonal zur Längsausdehnung bzw. zur Zylinderachse aus dem Lichtleiter ausgekoppelt werden. Bevorzugt sind die Lichtstrahlen nach dem Auskoppeln in x-Richtung orientiert, wobei die x-Richtung der Längsachse eines Kraftfahrzeugs entspricht, welches die Beleuchtungsvorrichtung aufweist.

Es kann vorgesehen sein, dass Licht, welches aus dem ersten Bereich des Lichtleiters ausgekoppelt wird, ausschließlich auf den ersten Abschnitt der Lichteintrittsfläche des ersten optischen Elements trifft. Mit anderen Worten, trifft Licht, welches aus dem ersten Bereich des Lichtleiters austritt, nicht auf den gesamten zweiten Abschnitt der Lichteintrittsfläche des ersten optischen Elements.

Es kann vorgesehen sein, dass das zweite optische Element an einer dem gekrümmten Bereich des Lichtleiters zugewandten Fläche Eintrittsoptiken aufweist, welche dazu eingerichtet sind, das Licht, welches von dem gekrümmten Bereich des Lichtleiters ausgekoppelt wird, beim Eintritt in das zweite optische Element in Richtung des zweiten Abschnitts des ersten optischen Elements umzulenken. Die Eintrittsoptiken können als Facetten ausgebildet sein, welche sich in einem gleichmäßigen Raster über die dem gekrümmten Bereich des Lichtleiters zugewandten Fläche erstrecken. Die Eintrittsoptiken sind insbesondere dazu eingerichtet, die Lichtstrahlen derart umzulenken, dass sie nach dem Austritt aus dem zweiten optischen Element den gesamten zweiten Abschnitt des ersten optischen Elements beleuchten.

Es kann vorgesehen sein, dass das zweite optische Element an einer dem ersten optischen Element zugewandten Fläche Austrittsoptiken aufweist, welche dazu eingerichtet sind, das Licht beim Austritt aus dem zweiten optischen Element derart umzulenken, dass die aus dem zweiten optischen Element austretenden Lichtstrahlen parallel zu den aus dem ersten Abschnitt des Lichtleiters ausgekoppelten Lichtstrahlen orientiert sind. Die Austrittsoptiken können als Facetten ausgestaltet sein, welche die Lichtstrahlen beim Austritt parallelisieren.

Es kann vorgesehen sein, dass das zweite optische Element im Wesentlichen prismenartig ausgestaltet ist, wobei vorzugsweise eine erste Fläche des Prismas dem gekrümmten Bereich des Lichtleiters und eine zweite Fläche des Prismas der Lichteintrittsfläche des zweiten Abschnitts des ersten optischen Elements zugewandt ist. Das zweite optische Element kann auch keilförmig ausgestaltet sein. Insbesondere füllt das zweite optische Element zumindest teilweise oder vollständig den Raum, welcher sich zwischen dem gekrümmten Bereich des Lichtleiters und dem zweiten Abschnitt des ersten optischen Elements befindet. Dadurch kann eine besonders kompakte und platzsparende Bauart erzielt werden.

Es kann vorgesehen sein, dass der Lichtleiter und das zweite optische Element zueinander beabstandet sind und/oder das erste optische Element und das zweite optische Element zueinander beabstandet sind. Dadurch ergibt sich der Vorteil, dass die optisch aktiven Flächen durch einen unerwünschten Kontakt, beispielsweise auf Grund von Vibrationen, nicht beschädigt werden.

Es kann vorgesehen sein, dass eine dem Lichtleiter zugewandte Fläche des zweiten optischen Elements eine Krümmung aufweist, welche im Wesentlichen gleich der Krümmung des gekrümmten Bereichs des Lichtleiters ist. Der Abstand zwischen der dem Lichtleiter zugewandten Fläche des zweiten optischen Elements und dem gekrümmten Bereich kann konstant sein.

Es kann vorgesehen sein, dass eine dem ersten optischen Element zugewandte Fläche des zweiten optischen Elements im Wesentlichen parallel zu der Lichteintrittsfläche des ersten optischen Elements orientiert ist.

Es kann vorgesehen sein, dass das erste optische Element dazu eingerichtet ist, eine Lichtfunktion, insbesondere eine Signallichtfunktion, zu erzeugen. Beispielsweise kann mit der Beleuchtungsvorrichtung eine Seitenmarkierungsleuchte, ein Tagfahrlicht, ein Fahrtrichtungsanzeiger oder ein Positionslicht für ein Kraftfahrzeug bereitgestellt werden. Das Licht, welches aus dem ersten optischen Element austritt, wird vorzugsweise in Richtung HV abgestrahlt.

Es kann vorgesehen sein, dass das zweite optische Element als transparenter Vollkörper ausgebildet ist. Alternativ dazu, kann das zweite optische Element als Hohlkörper ausgebildet sein.

Es kann vorgesehen sein, dass der gekrümmte Bereich des Lichtleiters und das zweite optische Element einstückig ausgebildet sind. In diesem Fall können der Lichtleiter und das zweite optische Element ein unterschiedliches Material aufweisen, wobei die beiden Materialien einen unterschiedlichen Brechungsindex aufweisen können. An der Grenzfläche zwischen dem gekrümmten Bereich des Lichtleiters und dem zweiten optischen Element, kann es zu der Brechung des Lichts in Richtung des zweiten Abschnitts der Lichteintrittsfläche des ersten optischen Elements kommen, sodass der gesamte zweite Abschnitt, nach dem Austritt aus dem zweiten optischen Element, beleuchtet wird. Der gekrümmte Beriech des Lichtleiters und das zweite optische Element können auch einstückig und aus demselben Material hergestellt werden. Alternativ dazu kann vorgesehen sein, dass das erste optische Element und das zweite optische Element einstückig ausgebildet sind.

Erfindungsgemäß ist ein Kraftfahrzeugscheinwerfer-System vorgesehen, umfassend zumindest einen, vorzugsweise zwei, Kraftfahrzeugscheinwerfer und eine Beleuchtungsvorrichtung, wobei vorzugsweise die Beleuchtungsvorrichtung zwischen den beiden Kraftfahrzeugscheinwerfern angeordnet ist. Damit ergibt sich der Vorteil, dass beispielsweise an einer Vorderseite eines Kraftfahrzeugs, welches das Kraftfahrzeugscheinwerfer-System ausweist, zusätzlich zu dem Licht der beiden Scheinwerfer, eine Signallichtfunktion mit der Beleuchtungsvorrichtung erzeugt werden kann. Diese Signallichtfunktion kann über bzw. unter und/oder zwischen den beiden Scheinwerfern abgestrahlt werden. Das Kraftfahrzeugscheinwerfer-System kann alternativ dazu zumindest einen, vorzugsweise zwei, Kraftfahrzeugscheinwerfer umfassen, wobei die Beleuchtungsvorrichtung beispielsweise innerhalb, vorzugsweise an einem Randbereich, des Kraftfahrzeugscheinwerfers angeordnet sein kann, um eine zusätzliche Lichtfunktion für den Kraftfahrzeugscheinwerfer bereitzustellen.

Es kann vorgesehen sein, dass der Lichtleiter der Beleuchtungsvorrichtung ein erstes und ein zweites Ende aufweist, wobei an jedem Ende Licht mittels einer Lichtquelle in den Lichtleiter eingekoppelt wird.

Erfindungsgemäß ist ein Kraftfahrzeug vorgesehen, mit einer Beleuchtungsvorrichtung oder einem Kraftfahrzeugscheinwerfer-System, umfassend zumindest einen, vorzugsweise zwei, Kraftfahrzeugscheinwerfer und eine oben beschriebene Beleuchtungsvorrichtung,

Die Erfindung wird nachstehend anhand eines bevorzugten Ausführungsbeispiels, auf das sie jedoch nicht beschränkt sein soll, noch weiter erläutert. In den Zeichnungen zeigt:
- Fig. 1: eine Detailansicht einer Beleuchtungsvorrichtung gemäß dem Stand der Technik;
- Fig. 2a, 2b und 3: Detailansichten einer erfindungsgemäßen Beleuchtungsvorrichtung;
- Fig. 4: eine zweite Ausführungsform einer erfindungsgemäßen Beleuchtungsvorrichtung.

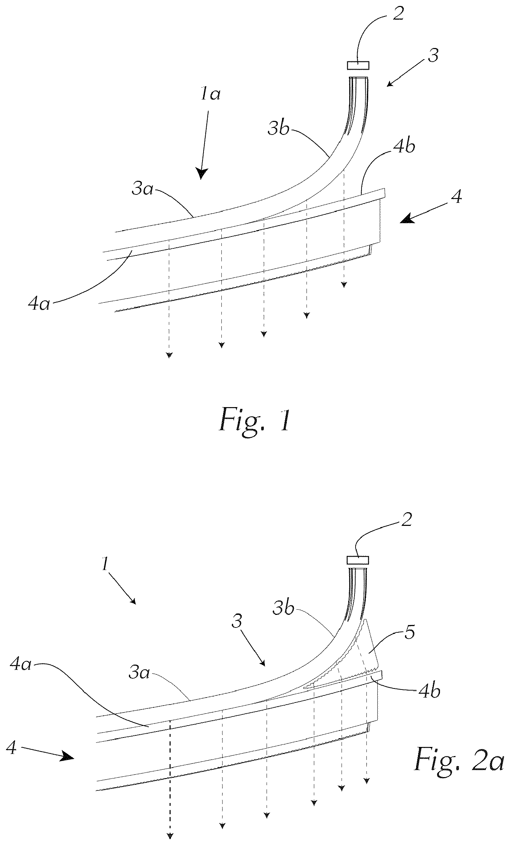

Fig. 1 zeigt einen Ausschnitt einer Beleuchtungsvorrichtung 1a für ein Kraftfahrzeug gemäß dem Stand der Technik. Die Beleuchtungsvorrichtung 1a umfasst ein Leuchtmittel 2 zur Erzeugung und Abstrahlung von Licht und einen Lichtleiter 3, wobei das Licht des Leuchtmittels 2 in den Lichtleiter 3 eingekoppelt und an einer Auskoppelfläche des Lichtleiters 3 ausgekoppelt wird. Der Lichtleiter 3 hat einen ersten Bereich 3a und einen an den ersten Bereich 3a anschließenden gekrümmten Bereich 3b. Die Auskoppelfläche erstreckt sich über den ersten 3a und den gekrümmten Bereich 3b. Der Lichtleiter ist dergestalt ausgebildet, dass die Lichtstrahlen nach dem Auskoppeln aus dem ersten Bereich 3a parallel zueinander orientiert sind. Die Beleuchtungsvorrichtung 1a umfasst ein erstes optisches Element 4 mit einer Lichteintrittsfläche, welche einen ersten Abschnitt 4a und einen an den ersten Abschnitt angrenzenden zweiten Abschnitt 4b aufweist. Das erste optische Element 4 ist zu dem Lichtleiter 3 dergestalt angeordnet, dass Licht, welches aus dem ersten Bereich 3a des Lichtleiters 3 ausgekoppelt wird, auf den ersten Abschnitt 4a der Lichteintrittsfläche des ersten optische Elements 4 trifft. Licht, welches aus dem gekrümmten Bereich 3b des Lichtleiters 3 ausgekoppelt wird, trifft lediglich auf einen Teilbereich des zweiten Abschnitts 4b der Lichteintrittsfläche des ersten optischen Elements 4.

Die Lichtstrahlen sind nach dem Auskoppeln aus dem ersten Bereich 3a des Lichtleiters 3 orthogonal zu dem ersten Bereich 3a des Lichtleiters 3 und orthogonal zur Lichteintrittsfläche 4a, 4b des ersten optischen Elements 4 orientiert. Die Lichtstrahlen können nach dem Auskoppeln auch in x-Richtung orientiert sein. Licht, welches aus dem ersten Bereich 3a des Lichtleiters 3 ausgekoppelt wird, trifft ausschließlich auf den ersten Abschnitt 4a der Lichteintrittsfläche des ersten optischen Elements 4 und kann auch einen Teilbereich des zweiten Abschnitts 4b beleuchten. Somit wird nachteiligerweise, auf Grund der Krümmung des Lichtleiters, der zweiten Abschnitt 4b der Lichteintrittsfläche nicht vollständig beleuchtet.

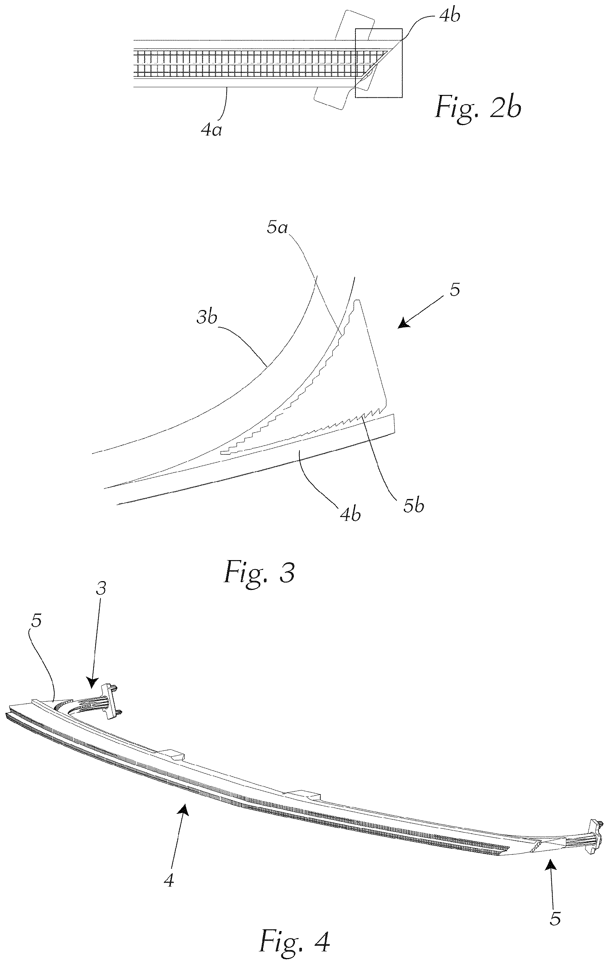

Fig. 2a, 2b und im Detail Fig. 3 zeigen eine erfindungsgemäße Beleuchtungsvorrichtung 1. Die Beleuchtungsvorrichtung 1 weist die Komponenten der Beleuchtungsvorrichtung 1a auf und umfasst zusätzlich ein zweites optisches Element 5, welches zwischen dem gekrümmten Bereich 3b des Lichtleiters 3 und dem zweiten Abschnitt 4b der Lichteintrittsfläche des ersten optischen Elements 4 angeordnet und dazu eingerichtet ist, Licht, welches aus dem gekrümmten Bereich 3b des Lichtleiters 3 ausgekoppelt wird, derart umzulenken, dass das Licht, nach dem Durchtritt durch das zweite optische Element 5, auf den gesamten zweiten Abschnitt 4b der Lichteintrittsfläche des ersten optischen Elements 4 trifft. Der erste Bereich 3a des Lichtleiters 3 und der erste Abschnitt 4a des ersten optischen Elements 4 sind im Wesentlichen parallel zu einander orientiert. Das zweite optische Element 5 hat an einer dem gekrümmten Bereich 3b des Lichtleiters 3 zugewandten Fläche 5a Eintrittsoptiken, welche dazu eingerichtet sind, das Licht, welches von dem gekrümmten Bereich 3b des Lichtleiters 3 ausgekoppelt wird, beim Eintritt in das zweite optische Element 5 in Richtung des zweiten Abschnitts 4b des ersten optischen Elements 4 umzulenken.

Das zweite optische Element 5 hat an einer dem ersten optischen Element 4 zugewandten Fläche 5b Austrittsoptiken, welche dazu eingerichtet sind, das Licht beim Austritt aus dem zweiten optischen Element 5 derart umzulenken, dass die aus dem zweiten optischen Element 5 austretenden Lichtstrahlen parallel zu den aus dem ersten Abschnitt 3a des Lichtleiters 3 ausgekoppelten Lichtstrahlen orientiert sind.

Das zweite optische Element 5 kann im Wesentlichen prismenartig ausgestaltet sein, wobei eine erste Fläche des Prismas dem gekrümmten Bereich 3b des Lichtleiters 3 und eine zweite Fläche des Prismas der Lichteintrittsfläche des zweiten Abschnitts 4b des ersten optischen Elements 4 zugewandt ist. Die dem Lichtleiter 3 zugewandte Fläche 5a des zweiten optischen Elements 5 hat eine Krümmung, welche im Wesentlichen gleich der Krümmung des gekrümmten Bereichs 3b des Lichtleiters 3 ist. Die dem ersten optischen Element 4 zugewandte Fläche 5b des zweiten optischen Elements 5 ist im Wesentlichen parallel zu der Lichteintrittsfläche 4a, 4b des ersten optischen Elements 4 orientiert. In dem gezeigten Ausführungsbeispiels ist das zweite optische Element 5 zu dem ersten optischen Element 4 und dem Lichtleiter 3 beabstandet.

Fig. 2b zeigt eine Ansicht auf die Lichteintrittsflächen 4a, 4b. Die Lichteintrittsflächen 4a, 4b können einen stufenförmigen Aufbau aufweisen.

Fig. 4 zeigt eine Ansicht einer zweiten Ausführungsform der Beleuchtungsvorrichtung 1. Bei dieser Aufführungsform weist der Lichtleiter 3 ein erstes und ein zweites Ende auf, wobei an jedem Ende Licht mittels eines Leuchtmittels 2 in den Lichtleiter 3 eingekoppelt wird, wobei das Licht nach dem Auskoppeln aus dem Lichtleiter auf die Lichteintrittsfläche des ersten optischen Elements 4 abgestrahlt wird. An das erste und zweite Ende des Lichtleiters 3 schließt jeweils ein gekrümmter Bereich an, wobei an den beiden gekrümmten Bereichen jeweils ein zweites optisches Element 5 gemäß den Fig. 2a, 2b und 3 angeordnet sein kann. Damit kann eine beidseitige Lichteinkopplung in den Lichtleiter 3 erfolgen.

## Patentansprüche

1. Beleuchtungsvorrichtung (1) für ein Kraftfahrzeug oder für ein Kraftfahrzeugscheinwerfer-System, wobei die Beleuchtungsvorrichtung Folgendes umfasst:
- ein Leuchtmittel (2) zur Erzeugung und Abstrahlung von Licht,
- einen Lichtleiter (3), wobei das Licht des Leuchtmittels (2) in den Lichtleiter (3) eingekoppelt und an einer Auskoppelfläche des Lichtleiters (3) ausgekoppelt wird, wobei der Lichtleiter (3) einen ersten Bereich (3a) und einen an den ersten Bereich (3a) anschließenden gekrümmten Bereich (3b) aufweist, wobei sich die Auskoppelfläche über den ersten (3a) und den gekrümmten Bereich (3b) erstreckt und dergestalt ausgebildet ist, dass die Lichtstrahlen nach dem Auskoppeln aus dem ersten Bereich (3a) parallel zueinander orientiert sind,
- ein erstes optisches Element (4) mit einer Lichteintrittsfläche, welche einen ersten Abschnitt (4a) und einen an den ersten Abschnitt angrenzenden zweiten Abschnitt (4b) aufweist, wobei das erste optische Element (4) zu dem Lichtleiter (3) dergestalt angeordnet ist, dass Licht, welches aus dem ersten Bereich (3a) des Lichtleiters (3) ausgekoppelt wird, auf den ersten Abschnitt (4a) der Lichteintrittsfläche des ersten optische Elements (4) trifft, und Licht, welches aus dem gekrümmten Bereich (3b) des Lichtleiters (3) ausgekoppelt wird, auf einen Teilbereich des zweiten Abschnitts (4b) der Lichteintrittsfläche des ersten optischen Elements (4) trifft,
**dadurch gekennzeichnet, dass**
die Beleuchtungsvorrichtung (1) ein zweites optisches Element (5) aufweist, welches zwischen dem gekrümmten Bereich (3b) des Lichtleiters (3) und dem zweiten Abschnitt (4b) der Lichteintrittsfläche des ersten optischen Elements (4) dergestalt angeordnet und dazu eingerichtet ist, Licht, welches aus dem gekrümmten Bereich (3b) des Lichtleiters (3) ausgekoppelt wird, derart umzulenken, dass das Licht, nach dem Durchtritt durch das zweite optische Element (5), auf den gesamten zweiten Abschnitt (4b) der Lichteintrittsfläche des ersten optischen Elements (4) trifft.

2. Beleuchtungsvorrichtung (1) nach Anspruch 1, wobei der erste Bereich (3a) des Lichtleiters (3) und der erste Abschnitt (4a) des ersten optischen Elements (4) im Wesentlichen parallel zu einander orientiert sind.

3. Beleuchtungsvorrichtung (1) nach einem der vorhergehenden Ansprüche, wobei die Lichtstrahlen nach dem Auskoppeln aus dem Lichtleiter (3) orthogonal zu dem ersten Bereich (3a) des Lichtleiters (3) und/oder vorzugsweise orthogonal zur Lichteintrittsfläche (4a, 4b) des ersten optischen Elements (4) orientiert sind.

4. Beleuchtungsvorrichtung (1) nach einem der vorhergehenden Ansprüche, wobei Licht, welches aus dem ersten Bereich (3a) des Lichtleiters (3) ausgekoppelt wird, ausschließlich auf den ersten Abschnitt (4a) der Lichteintrittsfläche des ersten optischen Elements (4) trifft.

5. Beleuchtungsvorrichtung (1) nach einem der vorhergehenden Ansprüche, wobei das zweite optische Element (4) an einer dem gekrümmten Bereich (3b) des Lichtleiters (3) zugewandten Fläche (5a) Eintrittsoptiken aufweist, welche dazu eingerichtet sind, das Licht, welches von dem gekrümmten Bereich (3b) des Lichtleiters (3) ausgekoppelt wird, beim Eintritt in das zweite optische Element (5) in Richtung des zweiten Abschnitts (4b) des ersten optischen Elements (4) umzulenken.

6. Beleuchtungsvorrichtung (1) nach einem der vorhergehenden Ansprüche, wobei das zweite optische Element (5) an einer dem ersten optischen Element (4) zugewandten Fläche (5b) Austrittsoptiken aufweist, welche dazu eingerichtet sind, das Licht beim Austritt aus dem zweiten optischen Element (5) derart umzulenken, dass die aus dem zweiten optischen Element (5) austretenden Lichtstrahlen parallel zu den aus dem ersten Abschnitt (3a) des Lichtleiters (3) ausgekoppelten Lichtstrahlen orientiert sind.

7. Beleuchtungsvorrichtung (1) nach einem der vorhergehenden Ansprüche, wobei das zweite optische Element (5) im Wesentlichen prismenartig ausgestaltet ist, wobei vorzugsweise eine erste Fläche des Prismas dem gekrümmten Bereich (3b) des Lichtleiters (3) und eine zweite Fläche des Prismas der Lichteintrittsfläche des zweiten Abschnitts (4b) des ersten optischen Elements (4) zugewandt ist.

8. Beleuchtungsvorrichtung (1) nach einem der vorhergehenden Ansprüche, wobei der Lichtleiter (3) und das zweite optische Element (5) zueinander beabstandet sind und/oder das erste optische Element (4) und das zweite optische Element (5) zueinander beabstandet sind.

9. Beleuchtungsvorrichtung (1) nach einem der vorhergehenden Ansprüche, wobei eine dem Lichtleiter (3) zugewandte Fläche (5a) des zweiten optischen Elements (5) eine Krümmung aufweist, welche im Wesentlichen gleich der Krümmung des gekrümmten Bereichs (3b) des Lichtleiters (3) ist.

10. Beleuchtungsvorrichtung (1) nach einem der vorhergehenden Ansprüche, wobei eine dem ersten optischen Element (4) zugewandte Fläche (5b) des zweiten optischen Elements (5) im Wesentlichen parallel zu der Lichteintrittsfläche (4a, 4b) des ersten optischen Elements (4) orientiert ist.

11. Beleuchtungsvorrichtung (1) nach einem der vorhergehenden Ansprüche, wobei das erste optische Element (4) dazu eingerichtet ist, eine Lichtfunktion, insbesondere eine Signallichtfunktion, zu erzeugen.

12. Beleuchtungsvorrichtung (1) nach einem der vorhergehenden Ansprüche, wobei das zweite optische Element (5) als transparenter Vollkörper ausgebildet ist.

13. Beleuchtungsvorrichtung (1) nach einem der vorhergehenden Ansprüche, wobei der gekrümmte Bereich (3b) des Lichtleiters (3) und das zweite optische Element (5) einstückig ausgebildet sind.

14. Kraftfahrzeugscheinwerfer-System, umfassend zumindest einen, vorzugsweise zwei, Kraftfahrzeugscheinwerfer und eine Beleuchtungsvorrichtung (1) nach einem der Ansprüche 1-13, wobei vorzugsweise die Beleuchtungsvorrichtung (1) zwischen den beiden Kraftfahrzeugscheinwerfern angeordnet ist.

15. Kraftfahrzeugscheinwerfer-System nach Anspruch 14, wobei der Lichtleiter (3) der Beleuchtungsvorrichtung (1) ein erstes und ein zweites Ende aufweist, wobei an jedem Ende Licht mittels einer Lichtquelle in den Lichtleiter (3) eingekoppelt wird.
